# EUROPEAN PATENT APPLICATION

(11) **EP 4 203 115 A1**
(43) Date of publication of application: **28.06.2023**
(21) Application number: 21217825.5
(22) Date of filing: 27.12.2021
(51) Int. Cl.: H01M 8/02, H01M 8/04223

(54) **A FUEL CELL SYSTEM FOR A VEHICLE**

(71) Applicant: VOLVO TRUCK CORPORATION, 405 08 Göteborg (SE)
(72) Inventor: LINDBERG, Johan, 415 33 Göteborg (SE)
(74) Representative: Kransell & Wennborg KB

(57) **Abstract**

The disclosure relates to a fuel cell system (3) for a vehicle, said fuel cell system comprising at least one fuel cell stack (4) having one or more proton exchange membrane, PEM, fuel cells (4a) and at least one DC-DC power converter (11) arranged in electrical connection with said at least one fuel cell stack, said at least one DC-DC power converter having an inductor (12), wherein said inductor is configured and arranged to induce and direct magnetic flux towards said one or more PEM fuel cells.

## Description

### TECHNICAL FIELD

The present disclosure relates to a fuel cell system for a vehicle. The present disclosure also relates to a vehicle comprising such fuel cell system. The present disclosure may typically be applied in a fuel cell electric vehicle and used as a part of an electric powertrain system of heavy-duty vehicles, such as trucks, buses, and construction equipment.

Although the disclosure will be described with respect to an electric truck, the disclosure is not restricted to this particular vehicle, but may also be used in other hybrid or electrical vehicles such as electric buses, and electric cars. The disclosure may also be applied in any other type of electric vehicle such as electric powered construction equipment, electric working machines e.g. wheel loaders, articulated haulers, dump trucks, excavators and backhoe loaders etc. The present disclosure may likewise be applied in other vehicles such as marine vessels and the like.

### BACKGROUND

With the introduction of new energy storage systems in various types of vehicles, such as fuel cells in heavy-duty vehicles, there has been an increasing activity for developing new and adequate solutions for ensuring efficient operations of such systems. One area of particular interest in heavy-duty vehicles is the power output and efficiency from the fuel cell system. By way of example, fuel cell systems comprising one or more proton exchange membrane (PEM) fuel cell stacks are particularly suitable for vehicles due to their energy conversion efficiency and package compactness.

One possible option for enhancing performance and operation of a PEM fuel cell stack is disclosed in Ahmed A. Abdel-Rehim. The influence of electromagnetic field on the performance and operation of a PEMfuel cell stack subjected to a relatively low electromagnetic field intensity, Energy Conversion and Management, ISSN: 0196-8904, Vol: 198, Page: 111906, Publication Year 2019. Retrieved from <Elsevier, https://doi.org/10.1016/J.ENCONMAN.2019.111906>.

Despite the activity in the field, it would be desirable to further improve the operation of the fuel cell system during certain operational conditions.

Furthermore, in the field of heavy-duty vehicles, such as trucks, the requirements and operating conditions are often different compared to fuel cells for passenger cars. For example, the demands on the fuel cell system of a heavy-duty vehicle are generally higher compared to the demands on fuel cell systems for passenger cars due to the weight and the extensive operational loads of the trucks. Also, some types of electric heavy-duty vehicles generally include additional power sources besides the fuel cell system. In view of the aforesaid, it would also be desirable to improve the overall reliability of a fuel cell system of a heavy-duty vehicle.

### SUMMARY

An object of the disclosure is to provide a reliable and efficient implementation of applying magnetic flux through a fuel cell stack for a vehicle fuel cell system, thereby allowing the magnetic flux to enhance the efficiency of the fuel stack, and thus improving the overall efficiency of the fuel cell system. The object is at least partly achieved by a system according to independent claim 1 and also defined in the other independent claims. The dependent claims relate to advantageous embodiments.

According to a first aspect of the disclosure, there is provided a fuel cell system for a vehicle. The fuel cell system comprises at least one fuel cell stack having one or more proton exchange membrane, PEM, fuel cells and at least one DC-DC power converter arranged in electrical connection with the at least one fuel cell stack. The at least one DC-DC power converter comprises an inductor. The inductor is arranged and configured to induce and direct magnetic flux towards said one or more PEM fuel cells.

The development of the proposed fuel cell system is at least partly based on the insight that magnetic flux may cause a more efficient operation of the fuel cells making up the fuel cell stack of a PEM fuel cell stack. In particular, it has been observed that magnetic flux applied through the fuel cell stack can increase the polarization voltage. By increasing the fuel cell polarization voltage for a certain current density, the efficiency of the fuel cell stack may increase for a given magnitude of magnetic flux through the fuel cell stack.

The proposed fuel cell system provides for an efficient and robust way of generating magnetic flux through the fuel cell stack by utilizing an inductor located in a DC/DC power converter. In general, fuel cell systems such as PEM fuel cell systems may already incorporate and make use of a DC/DC power converter in order to regulate the voltage in the electronic circuit of the fuel cell system, thus it becomes possible to enhance the fuel stack efficiency by means of using magnetic flux generated from the inductor of the DC/DC power converter of the fuel cell system. Accordingly, the fuel cell system may not need a separate and dedicated device to generate magnetic flux for the fuel cell stack, but rather benefits from using the inductance of the DC-DC power converter.

By exposing the PEM fuel cells to magnetic flux from the inductor of the DC-DC power converter, it becomes possible to increase the polarization voltage, thus further increasing the efficiency of the fuel cell stack.

The magnetic flux is induced as a result of an electric current flowing through the DC-DC power converter from the fuel cell stack. In general, the electric current that flows through the inductor produces a magnetic flux that is proportional to the current. Hence, increased current will increase the average magnetic flux and thereby the polarisation voltage will increase compared to not having the magnetic field.

Accordingly, when the power demand from the vehicle on the fuel cell system increases, the current produced from the one or more fuel cells will increase which is then the average current through the inductance. As such, the system according to the example embodiments may be particularly useful for managing various operations of the fuel cell system requiring high power requests from the vehicle.

Hence, during driving situations with high power demands on the vehicle, the proposed fuel cell system allows for providing an improved and reliable power output compared to hitherto known fuel cell system for heavy-duty vehicles.

It should be noted that the direction of the magnetic flux through the fuel cell stack should be in a favourable direction of the fuel cell stack so as to provide the highest increase in polarization voltage. The optimal direction for the magnetic flux through the fuel cell stack may be controlled and set from data indicative of historical use of the fuel cell system, prevailing theory on fuel cell system, or determined from experimental use of various fuel cell systems. The direction for the magnetic flux may generally not change throughout operation. However, occasionally, the direction may be changed by a switching/reversing the electric coupling of the inductor.

The fuel cell stack may comprise a number of fuel cells, wherein the number of fuel cells are arranged in a stack configuration. A fuel cell stack is a device that converts chemical potential energy into electrical energy. By way of example, the fuel cell stack is a Proton Exchange Membrane (PEM) fuel cell stack. A PEM fuel cell stack is particularly suitable for vehicles due to its energy conversion efficiency and package compactness. PEM fuel cells are configured to convert the energy potential of a hydrogen-based fuel into electricity with water and heat as the major by-products.

By the arrangement of the DC-DC power converter in electrical connection with the fuel cell stack, there is provided a fuel cell system where the average fuel cell current is passing an inductor of the DC-DC power converter, whereby the magnetic flux is generated from the inductor. The inductor of the DC-DC power converter is generally configured to store and transfer energy in the DC-DC power converter in the form of magnetic energy.

The DC-DC converter may be any one of a boost converter, a step-up converter and the like. It should also be noted that the DC-DC converter may be provided in several different ways. In addition, or alternatively, the DC-DC converter may e.g. be a galvanic isolated DC-DC converter containing a H-bridges arrangement.

The DC-DC converter may be disposed in the electric circuit downstream the fuel cell stack to control the current in one or more fuel cells of the at least one fuel cell stack. Typically, the DC-DC converter may be used in a conventional manner in the electric circuit of the fuel cell system. The DCDC controls the current through the fuel cell stack by altering the duty cycle of the switched voltage, on the low voltage side. The switched voltage amplitude is the high voltage on the high voltage side provided that may be provided by the vehicle battery system. As such, the DC-DC converter is configured to regulate the voltage level to any one of the battery systems and the motor drive system to normal voltage level.

The inductor can be provided in several different ways. According to at least one embodiment, the inductor may be an induction coil surrounding the fuel cell stack. One advantage of this arrangement of the inductor is to provide an even further improved and reliable way of generating magnetic flux through the at least fuel cell stack during operation of the fuel cell system.

Typically, the inductor may be provided by a solenoid surrounding the fuel cell stack, whereby all of the magnetic flux is directed through the fuel cell stack.

According to at least one embodiment, the inductor may be configured to at least partly encapsulate the PEM fuel cells. In this manner, it becomes possible to provide a less complicated system in terms of manufacturing and implementation of the inductor around the fuel cell stack.

According to at least one embodiment, the inductor may at least partly be integrated into a housing of the fuel cell stack. In this manner, there is provided a compact fuel cell system that may further have a positive impact on the overall manufacturing and assembly of the fuel cell system.

In addition, or alternatively, the inductor may be configured as a solenoid having a core made of a magnetic material. Hence, the inductor may comprise a core made of a magnetic material. By way of example, the core may be an iron core. The iron core may be solid or made from iron powder. The core may also be made from a similar magnetic material.

During normal operation of the fuel cell system and the vehicle, the magnetic flux may be automatically controlled as a function of the fuel cell current and/or selectively controlled on the basis of the power demand from the vehicle.

Hence, according to one example embodiment, the magnetic flux may be automatically controlled as a function of a fuel cell current. In particular, the magnetic flux may generally be a result of the fuel cell current which may generally be a function of the power request. In this example embodiment, no additional control of the magnetic flux generation may be needed.

By way of example, the magnetic flux is automatically regulated during operation of the at least one fuel cell stack. In this manner, there is provided an even more efficient and reliable control of the magnetic flux through the at least one fuel cell stack.

According to at least one embodiment, the fuel cell system may further comprise regulating the magnetic flux on the basis of a power demand of the fuel cell stack. In this manner, there is provided a dynamic control of the magnetic flux through the at least one fuel cell stack. The magnetic flux may be regulated by a control unit. In addition, or alternatively, the magnetic flux may be regulated by controlling a movable core in the magnetic flux. By way of example, the magnetic flux may be regulated by a combination of the control unit and the movable core, wherein the control unit is configured to control the movement of the moveable core in the magnetic flux.

In addition, or alternatively, the magnetic flux may be regulated at low power demand by controlling a movable core in the magnetic flux. In this manner, there is provided an even more dynamic control of the magnetic flux through the at least one fuel cell stack. The core may generally be made by a magnetic material, such as iron.

According to at least one embodiment, the one or more PEM fuel cells maybe arranged in-between a first end plate and a second end plate, each one of the PEM fuel cells having a membrane electrode unit, a cathode-side distributor structure and an anode-side distributor structure. Typically, although strictly not necessary, at least one of the anode-side distributor structure and the cathode-side distributor structure is at least partially metallic.

According to a second aspect of the present disclosure, there is provided an electric powertrain system for a vehicle. The electric powertrain system comprises a fuel cell system according to the first aspect, a battery system, and an electrical machine, wherein the fuel cell system and the battery system are selectively connectable to the electrical machine. Effects and features of this second aspect of the present disclosure are largely analogous to those described above in connection with the first aspect of the disclosure. Embodiments mentioned in relation to the first aspect of the present disclosure are largely compatible with the second aspect of the disclosure.

According to a third aspect of the present disclosure, there is provided a vehicle, preferably an electric vehicle, comprising an electric powertrain system according to the second aspect of the disclosure. According to a fourth aspect of the present disclosure, there is provided a vehicle, preferably an electric vehicle, comprising a fuel cell system according to the first aspect of the disclosure. Effects and features of the third and fourth aspects of the present disclosure are largely analogous to those described above in connection with the first and second aspects of the disclosure. Embodiments mentioned in relation to the first and second aspects of the present disclosure are largely compatible with the third and fourth aspects of the present disclosure.

The vehicle maybe an electric vehicle, such as a fully or hybrid electrical vehicle, comprising a fuel cell system and an electric powertrain system. The vehicle may be an electrical, hybrid, or plug-in hybrid vehicle comprising an electrical motor, wherein the fuel cell system provides power to the electrical motor for providing propulsion for the electrical, hybrid, or plug-in hybrid vehicle. In other examples, the vehicle may comprise an electric powertrain system having both a battery system and a fuel cell system. The battery system and fuel cell system are generally in electrical connection with one or more electric machines.

Further features of, and advantages with, the present disclosure will become apparent when studying the appended claims and the following description. The skilled person realizes that different features of the present disclosure may be combined to create embodiments other than those described in the following, without departing from the scope of the present disclosure.

The terminology used herein is for the purpose of describing particular examples only and is not intended to be limiting of the disclosure. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

### BRIEF DESCRIPTION OF THE DRAWINGS

The above, as well as additional objects, features and advantages of the present disclosure, will be better understood through the following illustrative and non-limiting detailed description of exemplary embodiments of the present disclosure, wherein:
Fig. 1 is a side view of a vehicle in the form of a truck according to example embodiments of the disclosure;
Fig. 2 conceptually illustrates an example embodiment of a fuel cell system for the vehicle in Fig. 1 according to the disclosure; and
Figs. 3 and 4 conceptually illustrate another example embodiment of a fuel cell system for the vehicle in Fig. 1 according to the present disclosure.

With reference to the appended drawings, below follows a more detailed description of embodiments of the disclosure cited as examples.

### DETAILED DESCRIPTION OF EXAMPLE EMBODIMENTS OF THE DISCLOSURE

The present disclosure will be described more fully hereinafter with reference to the accompanying drawings, in which exemplary embodiments of the disclosure are shown. The disclosure may, however, be embodied in many different forms and should not be construed as limited to the embodiments set forth herein; rather, these embodiments are provided for thoroughness and completeness. The skilled person will recognize that many changes and modifications may be made within the scope of the appended claims. Similar reference characters refer to similar elements throughout the description.

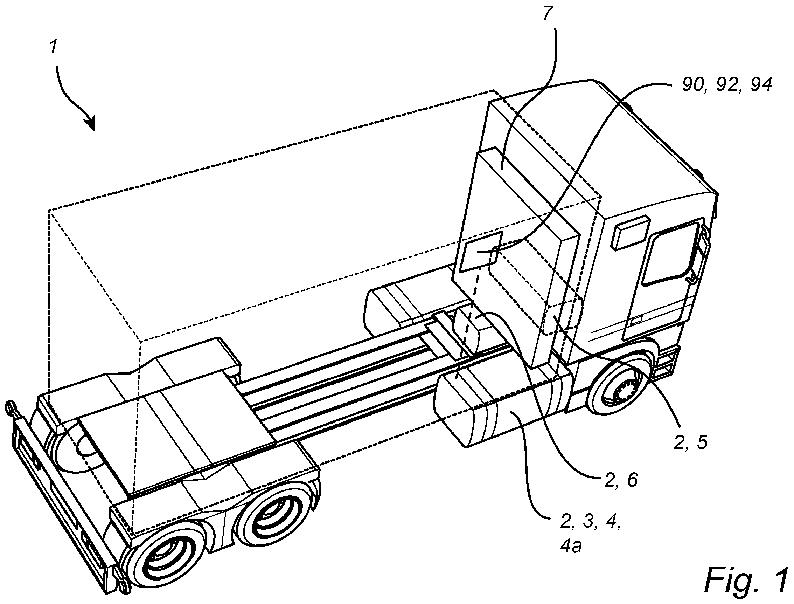

Referring now to the drawings and to Fig. 1 in particular, there is depicted an exemplary vehicle, here illustrated as an electrical truck 1. In this example, the electric truck is a fully electrical vehicle. The electrical truck 1 comprises an electric powertrain system 2 configured to provide traction power to the vehicle 1. By way of example, the electric powertrain system 2 comprises a fuel cell system 3. As such, the vehicle 1 is a fuel cell electric vehicle (FCEV) comprising the fuel cell system 3. The vehicle 1 further comprises a control unit 90. The control unit 90 generally comprises a processing circuitry 92 and a storage memory 94. The control unit 90 can be a part of an electronic control unit (ECU) for controlling the vehicle and various parts of the vehicle, such as the fuel cell system 3.

Fig. 1 depicts an illustrative example of some of components of the FCEV 1. The fuel cell system 3 comprises one or more fuel cell stacks 4 arranged to generate electricity to propel the vehicle and to power auxiliary equipment. Each one of the fuel cell stacks 4 comprises a plurality of fuel cells 4a (not shown). Each one of the fuel cell stacks 4 generally comprises a high number of fuel cells, e.g. 100-300 fuel cells connected in series. The fuel cell system may thus comprise a number of fuel cell stacks having a number of fuel cells, respectively. In other examples, the fuel cell system 3 comprises a single fuel cell stack 4 with a number of fuel cells.

While FCEVs may be configured in several different manners, the FCEV 1 in Fig. 1 also comprises a battery system 5 and an electric machine 6. The fuel cell system 3 together with the battery system 5 and the electric machine 6 form parts of the electric powertrain system 2 for providing traction power to the vehicle 1. The electric machine 6 is a traction motor for providing traction power to the vehicle 1, i.e. for propelling the wheels of the vehicle. The fuel cell system 3 is connected to the electrical machine 6 to provide power to the electrical machine 6, thereby the electrical machine 6 can provide traction power to one or more ground engaging members, e.g. one or more wheels. The electric machine may generally include a conventional electric motor.

The electrical powertrain system 2 may further comprise additional components as is readily known in the field of electrical propulsions systems, such as a transmission (not shown) for transmitting a rotational movement from the electric motor(s) to a propulsion shaft, sometimes denoted as the drive shaft (not shown). The propulsion shaft connects the transmission to the wheels. Furthermore, although not shown, the electrical motor is typically coupled to the transmission by a clutch. The traction motor (electric machine) is arranged to receive electric power from any one of the battery system 5 and the fuel cell system 3.

The fuel cell system may also comprise additional components as well as a so called balance of plant system. The balance of plant refers to and encompasses typically all components of the fuel cell system except the fuel cell stack itself.

Such components may relate to the flow systems to each one of the fuel cell stacks 4 making up the fuel cell system 3. These components may include the hydrogen supply system to an anode side of the fuel cell stack, an air supply system to a cathode side of the fuel cell stack, a coolant supply system to the cooling channel(s) of the fuel cell stack and possibly also water supply to a humidifier to humidify the hydrogen and the air flows. These flow systems and other parts of the fuel cell system 3 can generally be provided in several different manners, and thus not further described herein. In addition, the example embodiments of the fuel cell system here relate to the electrical side of the fuel cell system, thus no further information is provided in relation to the anode and cathode sides of the fuel cell system 3.

While there are several different types of fuel cells, distinguished mainly by the type of electrolyte used, a so-called Proton Exchange Membrane (PEM) fuel cell is particularly suitable for use in heavy-duty vehicles, such as the vehicle in Fig. 1. PEM fuel cells have high power density, a solid electrolyte and also a long operational lifetime. PEM fuel cells generally operate in a temperature range of 50 to 100 degrees C. The PEM fuel cell is configured to create electricity from two reactants, hydrogen and oxygen, such as compressed air.

The vehicle 1 here also comprises a hydrogen storage system 7 containing hydrogen in the form of gaseous form. The hydrogen is supplied to the fuel cells 4a of the fuel cell stack(s) 4 as commonly known in the art, e.g. by a fuel conduit system connecting the fuel cell stack(s) with the hydrogen storage system 7.

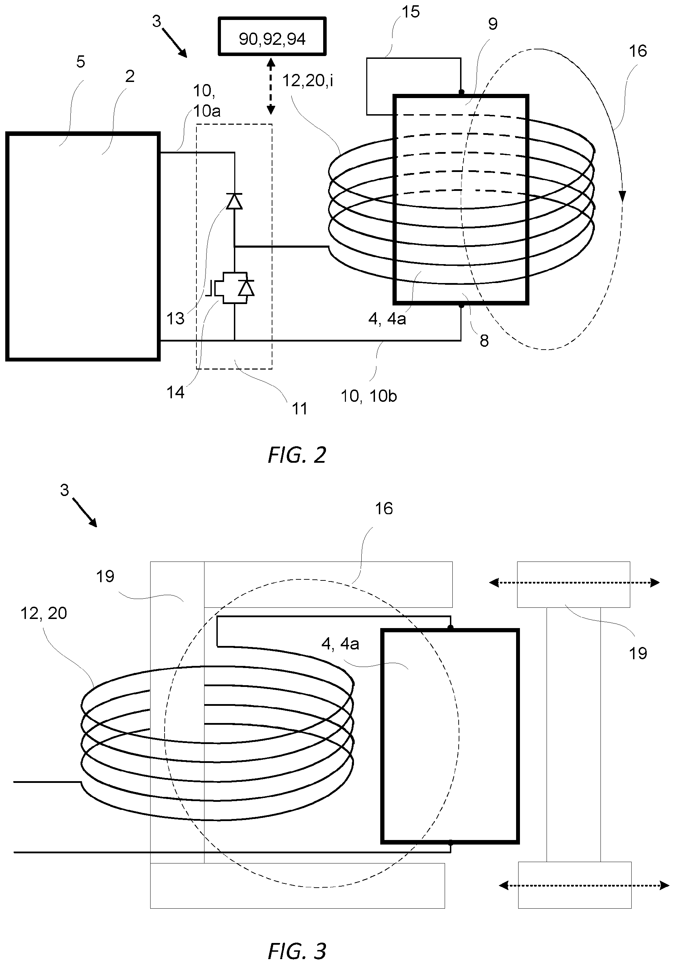

Referring now to Fig. 2, an illustrative example of further parts of the fuel cell system 3 of Fig. 1 is depicted. The fuel cell system 3 here comprises the fuel cell stack 4 containing a plurality of PEM fuel cells 4a arranged in a stacked series-configuration. As will be described herein, the fuel cell system 3 is configured to enhance the efficiency of a conventional fuel cell stack as e.g. exemplified by the following conventional fuel cell structure.

In a conventional fuel cell stack 4, the PEM fuel cells 4a are arranged in-between a first end plate 8 and a second end plate 9. Although not explicitly illustrated, each one of the fuel cells 4a comprises a membrane electrode unit, a cathode-side distributor structure and an anode-side distributor structure.

Moreover, as is generally known in the field of fuel cells, the anode and cathode electrodes are typically composed of carbon paper or cloth. These electrodes are separated by a catalyst-coated membrane (not illustrated). The membrane is thus sandwiched between the two electrodes (anode and cathode). The membrane is typically made from a highly conductive material such as Nafion or the like.

In operation of the fuel cell system 3, hydrogen, stored in the hydrogen storage system 7 (Fig. 1), enters one side of the fuel cell stack 4, while compressed air, containing needed oxygen, enters the other side. While the hydrogen molecules are transferred through the electrolyte in the fuel cells 4a towards the oxygen, the molecules are separated into electrons and protons. The protons are passed through the membrane while the electrons are transferred to the anode, thereby generating electricity for the FCEV 1 to be used for powering the electric machine and any auxiliaries. When the electrons reach the cathode, the electrons recombine with the protons, react with the oxygen, and form water as the end-product. In other words, hydrogen fuel and compressed air are consumed in the fuel cell stack 4 of the fuel cell system 3 to produce electricity, with water (or water vapor) and heat as the major by-products.

The anode, membrane and cathode are generally sealed together to form a single membrane electrolyte assembly, commonly denoted as the MEA of the fuel cell 4a.

Typically, the fuel cell stack 4 further comprises a plurality of bipolar plates (not illustrated) arranged in-between the MEAs to form the fuel cell stack configuration of the fuel cell stack 4. The bipolar plate is configured to distribute the hydrogen and compressed air over the active surface area of the fuel cell. Generally, the bipolar plates are further configured to conduct electrical current from the anode of one fuel cell to the cathode of a consecutive fuel cell. Thus, the bipolar plates provide electrical conduction between the fuel cells and removes heat from the active areas. While bipolar plates may differ for different applications, the bipolar plates are generally made of graphite or stamped metal. The fuel cell stack 4 here comprises the end plates 8, 9 that further support the fuel cell stack 4 as well as an optional surrounding gasket configured to prevent the gases from escaping from between the bipolar plates of the fuel cell stack 4.

Moreover, in this example, at least one of the anode-side distributor structure and the cathode-side distributor structure is at least partially metallic. Such arrangement may further enhance the transfer of magnetic flux across the fuel cells 4a. The generation and transfer of magnetic flux will be further described in the following.

As illustrated in Fig. 2, the fuel cell stack 4 is arranged in an electronic circuit 10 configured for directing produced electric current from the fuel cell stack 4 to one or more components arranged in the electronic circuit 10. The fuel cell stack 4 is generally electrical connected to a high voltage side of the electric powertrain system 2, including the electrical energy storage system in the form of one or more battery systems 5, an electric motor drive system for propulsion such as the electric machine 6 in Fig. 1, etc.

As illustrated in Fig. 2, the fuel cell system 3 further comprises a DC-DC power converter 11 arranged in electrical connection with the fuel cell stack 4. The DC-DC power converter 11 is disposed in the electronic circuit 10. The DC-DC power converter 11 is in electrical connection with the PEM fuel cells 4a of the fuel cell stack 4, thereby arranged to receive electric current produced from the PEM fuel cells 4a.

In this example, the fuel cell stack 4 is in electrical connection with the DC-DC power converter 11 by its electrical connection 15. Further, the DC-DC power converter 11 is in electrical connection via a connection 10a of the electric circuit 10 to the electric powertrain system 2. By way of example, the DC-DC power converter 11 is in electrical connection with the battery system 5. The battery system 5 may also be in electrical connection with the DC-DC converter 11 and the fuel cell stack 4 via a connection 10b of the electric circuit 10, as illustrated in Fig. 2.

In Fig. 2, the DC-DC power converter 11 is a boost converter. In other examples, the DC-DC power converter 11 may be a step-up converter. Moreover, in Fig. 2, the DC-DC power converter 11 is provided in the form of a boost converter having an inductor 12. In a boost converter, the inductor 12 is generally arranged to manage or resist changes in current by either increasing or decreasing the energy stored in the inductor magnetic field. Further, in a boost converter, the output voltage is always higher than the input voltage, i.e. the voltage received from the fuel cell stack 4.

By way of example, as illustrated in Fig. 2, the boost converter 11 here comprises two semiconductors in the form of a diode 13 and a transistor 14. Further, the boost converter 11 may comprise a capacitor (although not illustrated). However, the boost converter 11 may also be provided in other configurations. For ease of reference, the boost converter may herein generally be referred to as the DC-DC power converter 11.

As schematically depicted in Fig. 2, the inductor 12 is arranged and configured to induce and direct magnetic flux 16 towards the fuel cell stack 4. In particular, the inductor 12 is configured and arranged to induce and direct magnetic flux 16 towards the PEM fuel cells 4a.

The inductor 12 can be arranged and configured to generate magnetic flux and direct magnetic flux through the fuel cell stack 4 in several different manners. Fig. 2 illustrates schematically one example of arranging the inductor 12 to induce and direct magnetic flux 16 towards the PEM fuel cells 4a. In Fig. 3, there is schematically depicted another example embodiment of arranging the inductor 12 of the DC-DC power converter 11 to induce and direct magnetic flux 16 towards the PEM fuel cells 4a. Fig. 3 only illustrates relevant parts of the fuel cell system for describing an alternative arrangement of the inductor 12 as compared to the example in Fig. 2. Besides this alternative arrangement of the inductor 12 in Fig. 3, the example in Fig. 3 may include the components of the fuel cell system as described in relation to Figs. 1 and 2.

The inductor 12 can also be designed in several different manners on the basis of the fuel cell system 3 and the DC-DC power converter 11. In Fig. 2, the inductor 12 comprises a coil 20. The inductor 12 is here a passive electrical component consisting of the coil of wire. By way of example, the inductor coil 20 has a central core area with a constant number of turns of wire per unit length. However, there are many factors which may determine the ultimate inductance of the coil such as the shape of the coil, the number of turns of the insulated wire, the number of layers of wire, the spacing between the turns, the permeability of the core material, the size or cross-sectional area of the core etc. Accordingly, the inductor 12 may favourably be selected on the basis of the fuel cell system 3 and the fuel cell stack 4 so as to provide an adequate magnetic flux through the fuel cell stack 4 during ordinary use of the vehicle. In other words, the magnetic flux 16 may at least partly be adjusted in magnitude on the basis of the dimensions of the coil 20 of the inductor 12.

By the arrangements illustrated in Figs. 2 and 3, the fuel cell system 3 is arranged and configured to make use of the inductor 12 of the DC-DC booster converter 11 so as to generate magnetic flux 16. In this manner, it becomes possible to enhance the fuel cell stack efficiency by means of the magnetic flux. In particular, the fuel cell stack efficiency is here improved by exposing the PEM fuel cells 4a to the magnetic flux 16, whereby the polarization voltage is increased. As an increase in polarization voltage is provided, the efficiency of the fuel cell stack 4 is accordingly also increased.

Moreover, in Fig. 2, the inductor 12 is configured as a solenoid. In this example embodiment, the solenoid is arranged to at least partly surround and encapsulate the fuel cell stack 4. As such, the inductor 12 is arranged to at least partly encapsulate the PEM fuel cells 4a.

Typically, although strictly not necessary, the inductor 12 is provided by a solenoid entirely surrounding the fuel cell stack 4, whereby all of the magnetic flux is directed through the fuel cell stack 4.

In other words, the fuel cell stack 4 is here generally wrapped by the induction coil 20 of the inductor.

In some designs, the inductor 12 may at least partly be integrated into a housing of the fuel cell stack 4. This is another example of arranging the inductor 12 of the DC-DC power converter such that its induction coil surrounds the fuel cell stack 4.

The magnetic flux is induced as a result of a current flowing through the DC-DC power converter 11 from the fuel cell stack 4. The current is supplied to the solenoid as the inductor part of the DC-DC power converter from the fuel cell stack 4, as illustrated in Fig. 2. In other words, the current i is supplied to a wire of the induction coil 20 from the power output 15 of the fuel cell stack 4.

In general, the current, i , that flows through the inductor 12 produces a magnetic flux 16 that is proportional to the current. Hence, an increased current due to an increase in power demand from the fuel cell stack 4 will increase the average magnetic flux generated in the inductor 12 of the DC-DC power converter 11, and thereby the polarisation voltage will increase compared to not having the magnetic field.

Hence, the control of the magnetic flux may be regulated either automatically by the operation of the fuel cell system 3 and the vehicle 1, or regulated in a selective manner on the basis of a predicted power demand from the fuel cell stack 4 due to a heavy operation of the vehicle.

Optionally, the magnetic flux 16 is automatically controlled as a function of the fuel cell current. In other words, the magnetic flux 16 is automatically controlled as a function of the fuel cell current produced by the fuel cells 4a at a given period of time. The generated magnetic flux 16 is a result of the fuel cell current which may generally be a function of the power request from the vehicle 1 on the fuel cell stack 4. In this example embodiment, no additional control of the magnetic flux may thus be needed.

In addition, or alternatively, the magnetic flux 16 may be regulated on the basis of a power demand of the fuel cell stack 4. By way of example, the fuel cell system 3 comprises the control unit 90 configured to regulate the magnetic flux on the basis of a power demand of the fuel cell stack 4.

It should also be readily appreciated that the control unit 90 can be a part of an electronic control unit (ECU) for controlling the vehicle and various parts of the vehicle 1. In particular, the control unit 90 is arranged in communication with the fuel cell system 3, the fuel cell stack 4 and the DC-DC power converter 11. It may also be conceivable that the fuel cell stack 4 and/or the DC-DC power converter 11 comprise parts of the functionality of the control unit 90. It should be noted that the precise control of the fuel cell system 3 depends on the particular application and the particular operational conditions of the fuel cell system 3 and the vehicle 1.

In other words, while the magnetic flux may generally be automatically regulated during operation of the fuel cell stack 4, the magnetic flux may also be regulated in a more advanced manner on the basis of the power demand from the vehicle on the fuel cell system.

The control of the magnetic flux 16 in view of the power demand of the vehicle can be provided in several different manners, e.g. by the control unit 90, as mentioned above, but also in combination with other components, as will be described in the following.

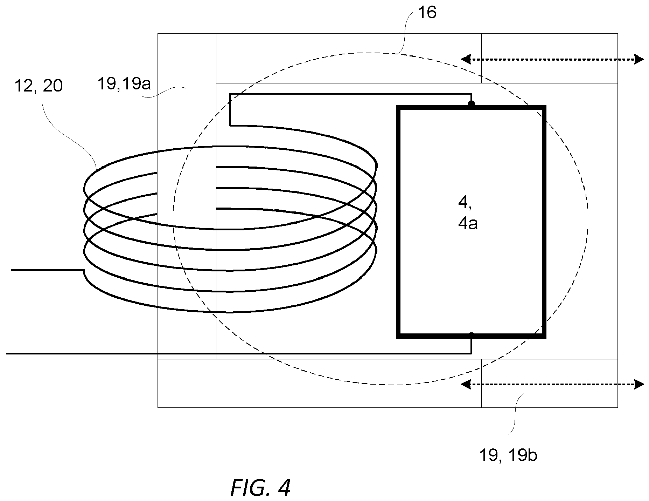

In Figs. 3 and 4, there is illustrated one example of arranging a part of an iron core 19, 19a in the coil 20 of the inductor 12. In addition, another part of the iron core 19b is arranged in a movable configuration within the magnet flux 16. The iron core part 19a and iron core part 19b may form a common iron core. However, the iron core part 19a and iron core part 19b may also considered as separate iron cores 19a, 19b, respectively.

The iron core part 19a is here arranged in a movable configuration in relation to the coil 20. As such, the iron core 19 is movable in the space inside the coil 20 of the inductor 12, thereby generating a magnetic flux. The generated magnetic flux 16 is directed through the fuel cells 4a of the fuel cell stack 4, as illustrated in Fig. 3. Accordingly, as illustrated in Fig. 3, the induction coil 20 of the inductor 12 may necessarily not be wound around the fuel cell stack 4.

In addition, the iron core part 19b is here arranged in a movable configuration in relation to the magnetic flux 16. As such, the iron core 19b is movable in the magnetic flux 16 generated by the inductor 12, thereby allowing a movement of the iron core part 19b to regulate the magnetic flux upon a movement of the iron core part 19b as indicated by the arrows in Figs. 3 and 4. The generated magnetic flux 16 is directed through the fuel cells 4a of the fuel cell stack 4, as illustrated in Figs. 3 and 4.

To this end, the magnetic flux 16 is optionally regulated at a low power demand by controlling a movable core 19 in the magnetic flux. The core 19 should generally be made by a magnetic material, such as iron. The core is thus an iron core. The iron core may be solid or made from iron powder. The core may also be made from a similar magnetic material.

In regard to the direction of the magnetic flux, it should be noted that the direction may generally not change throughout the operation of the fuel cell system 3. However, occasionally, the direction of the magnetic flux may be changed by a switching/reversing the coupling of the inductor. The optimal direction for the magnetic flux through the fuel cell stack may be controlled and set from data indicative of historical use, prevailing theory, or determined from experimental use of similar fuel cell systems. Typically, the direction of the magnetic flux should be set in a favourable direction of the fuel cell stack so as to provide the highest increase in polarisation voltage.

In all example embodiments as described in relation to Figs. 1 to 4, the fuel cell stack 4 of the fuel cell system 3 is connected to the other parts of the FCEV 1 for providing traction power via the one or more wheels. The FCEV 1 illustrated in Figs. 1 and 2 is configured in a series hybrid design where the fuel cell stack 4 of the fuel cell system 3 is paired with the battery system (battery packs) 5. In addition, the fuel cell system 3 of the FCEV 1 also includes the DC/DC power converter 11. The function of the DC/DC power converter 11 is to provide the power from fuel cell(s) of the fuel cell stack 4 at the right voltage as of the traction/battery system.

Traction power to the wheels is delivered by any one of the battery system 5 and the fuel cell stack 4 of fuel cell system 3. By way of example, the battery system 5 is connected via a junction box (not shown) to the electrical machine 6 that provides motive power to the vehicle, while the fuel cell stack 4 of the fuel cell system 3 supplies energy to the electrical machine 6 and/or delivers power to the battery system 5 via the DC/DC converter 11 and the junction box, as is commonly known in the field of FCEVs. In other words, a typical FCEV 1 may also use traction batteries or capacitors, inverters, and electric motors for providing traction power to the vehicle.

It should be noted that the configurations of the FCEV 1 and the fuel cell system 3 illustrated in Figs. 1 to 4 are only a few of many suitable configurations for a FCEV. By way of example, the fuel cell system 3 may include a plurality of fuel cell stacks 4 arranged in a parallel configuration with the battery system 5. In addition, the battery system 5 may include a plurality of battery packs. In addition, or alternatively, the battery system 5 may be an integral part of the fuel cell system 3.

Accordingly, while the DC-DC power converter 11 is above illustrated as being arranged in electrical connection with the electrical powertrain system 2 including the battery system 5, the DC-DC power converter 11 may in other examples be connected to a number of energy storage systems in the form of two battery packs forming the battery system 5. Other arrangements of battery packs are also conceivable, such as a single battery pack.

As mentioned herein, the vehicle 1 also comprises the control unit 90 for controlling various operations and functionalities of the fuel cell system. The control unit 90 is here the electronic control unit of the vehicle 1. The control unit 90 generally comprises the processing circuitry 92. In addition, the control unit 90 generally comprises the storage memory 94.

By way of example, the electronic control unit 90 is configured to operate the fuel cell system 3 in response to a control signal indicative of a power demand and/or a predicted power demand. Moreover, the electronic control unit 90 is configured to operate the fuel cell system 3 so as to generate a magnetic flux from the inductor 12 of the DC-DC power converter 11 on the basis of the power demand and/or the predicted power demand. The control unit 90 is here configured to gather and/or receive operating data relating to the vehicle 1 and the fuel cell system 3. The control unit 90 is also configured to transmit the gathered, or received, data to the processing circuitry 82 for further processing and control of the fuel cell system, such as controlling the moveable core 19, so as to enhance the efficiency of the fuel cell stack 3 by generating and regulating an appropriate magnetic flux through the fuel cell stack 3 on the basis of the power demand and/or the predicted power demand.

The control unit 90 may include a microprocessor, microcontroller, programmable digital signal processor or another programmable device. Thus, each one of the control units comprises electronic circuits and connections (not shown) as well as processing circuitry (e.g. processing circuitry 82) such that the control unit can communicate with different parts of the truck such as the brakes, suspension, driveline, in particular an electrical engine, an electric machine, fuel cell system, a clutch, and a gearbox in order to at least partly operate the truck. Each one of the control units may comprise modules in either hardware or software, or partially in hardware or software and communicate using known transmission buses such as CAN-bus and/or wireless communication capabilities. The processing circuitry may be a general purpose processor or a specific processor. Each one of the control units comprises a non-transitory memory for storing computer program code and data upon. Thus, the skilled addressee realizes that each one of the control units may be embodied by many different constructions.

The control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

Likewise, software implementations could be accomplished with standard programming techniques with rule-based logic and other logic to accomplish the various connection steps, processing steps, comparison steps and decision steps.

In addition, the disclosure relates to the vehicle 1 comprising the fuel cell system 3 according to any one of the example embodiments as described in relation to the Figs. 1 to 4.

It is to be understood that the present disclosure is not limited to the embodiments described above and illustrated in the drawings; rather, the skilled person will recognize that many changes and modifications may be made within the scope of the appended claims. For example, although the present disclosure has mainly been described in relation to an electrical truck, the disclosure should be understood to be equally applicable for any type of electrical vehicle, in particular an electrical bus, an electrical car or the like. Variations to the disclosed embodiments can be understood and effected by the skilled addressee in practicing the claimed disclosure, from a study of the drawings, the disclosure, and the appended claims. Furthermore, in the claims, the word "comprising" does not exclude other elements or steps, and the indefinite article "a" or "an" does not exclude a plurality.

## Claims

1. A fuel cell system (3) for a vehicle, said fuel cell system comprising at least one fuel cell stack (4) having one or more proton exchange membrane, PEM, fuel cells (4a) and at least one DC-DC power converter (11) arranged in electrical connection with said at least one fuel cell stack, said at least one DC-DC power converter having an inductor (12),
wherein said inductor is arranged and configured to induce and direct magnetic flux towards said one or more PEM fuel cells.

2. The fuel cell system according to claim 1, wherein the inductor is an induction coil (20) at least partly surrounding the fuel cell stack.

3. The fuel cell system according to claims 1 or 2, wherein the inductor is at least partly encapsulating the one or more PEM fuel cells.

4. The fuel cell system according to any one of the preceding claims, wherein the inductor is at least partly integrated into a housing of the fuel cell stack.

5. The fuel cell system according to any one of the preceding claims, wherein the inductor is configured as a solenoid having a core (19) made of a magnetic material.

6. The fuel cell system according to any one of the preceding claims, wherein the magnetic flux is automatically controlled as a function of a fuel cell current.

7. The fuel cell system according to any one of the preceding claims, wherein the magnetic flux is automatically regulated during operation of the fuel cell stack.

8. The fuel cell system according to any one of the preceding claims, further comprising regulating the magnetic flux on the basis of a power demand of the fuel cell stack.

9. The fuel cell system according to any one of the preceding claims, wherein the magnetic flux is regulated at low power demand by controlling a movable core in the magnetic flux.

10. The fuel cell system according to any one of the preceding claims, wherein the DC-DC power converter is any one of a boost converter and a step-up converter.

11. The fuel cell system according to any one of the preceding claims, wherein the one or more PEM fuel cells are arranged in-between a first end plate and a second end plate, each one of the PEM fuel cells having a membrane electrode unit, a cathode-side distributor structure and an anode-side distributor structure.

12. The fuel cell system according to claim 11, wherein at least one of the anode-side distributor structure and the cathode-side distributor structure is at least partially metallic.

13. An electric powertrain system for a vehicle (1), said electric powertrain system comprising a fuel cell system according to any one of the preceding claims, a battery system and an electrical machine, wherein the fuel cell system and the battery system are selectively connectable to the electrical machine.

14. A vehicle (1) comprising a fuel cell system according to any one of the preceding claims 1 to 12 and/or an electric powertrain system according to claim 13.
